# EUROPEAN PATENT APPLICATION

(11) **EP 2 388 630 A1**
(43) Date of publication of application: **23.11.2011**
(21) Application number: 10163563.9
(22) Date of filing: 21.05.2010
(51) Int. Cl.: G02B 6/122, G02B 6/138, G02B 1/04, G02B 6/10, G06F 3/042, B29D 11/00

(54) **Optical waveguide with a cladding having lower transmittance in visible than near-infrared wavelength range and its use in an optical touch panel**

(71) Applicant: Nitto Denko Corporation, Ibaraki-shi Osaka 567-8680 (JP)
(72) Inventor: Shimizu, Yusuke, Osaka 567-8680 (JP); Toshikawa, Sakura, Osaka 567-8680 (JP)
(74) Representative: HOFFMANN EITLE

(57) **Abstract**

In an optical touch panel (20) using optical waveguides, a pigment mixture consists of at least 2 kinds of pigments is contained in a clad (14). The pigment mixture has stronger absorption of light in a visible range than in a near-infrared range. Signal beams in the near-infrared range are hardly absorbed, although ambient light having entered the clad (14) in the visible range is strongly absorbed. This makes it possible to significantly reduce ambient light in the visible range to enter cores (12) after passing through the clad (14) and it is possible to use the optical touch panel (20) outdoors, either.

## Description

### TECHNICAL FIELD OF THE INVENTION

The present invention relates to an optical waveguide and an optical touch panel using the same.

### BACKGROUND ART

In optical touch panels, it is important to remove ambient light to obtain favorable characteristics. In a general optical touch panel, a light-emitting element and a light-receiving element are arranged so as to face each other around a coordinate input region. In this case, a sealing resin (light-blocking member) to absorb visible light is provided on the light-receiving element to block ambient light (See JP 11-086698 A).

However, in the optical touch panel with this structure, the light-receiving element is arranged near the coordinate input region where ambient light directly enters. Therefore, it is difficult to remove ambient light by a light blocking member alone.

In contrast, an optical touch panel wherein an optical waveguide is provided between a light-emitting element and a coordinate input region and an optical waveguide is provided between the coordinate input region and a light-receiving element has been known. In the optical touch panel, an optical signal is transmitted from the light-emitting element to the coordinate input region after passing through the optical waveguides. Further, the optical signal having passed through the coordinate input region reaches the light-receiving element after passing through the optical waveguides (See JP 2008-203431 A). In the optical touch panel with such a structure, a light-receiving element is not needed to be arranged around the coordinate input region. Accordingly, the optical waveguide with this structure is less affected by ambient light noise than general optical touch panels.

However, the optical touch panel with optical waveguide is still not sufficiently capable of blocking ambient light and therefore it remains difficult to use such an optical touch panel in environments with higher light levels such as outdoors.

### SUMMARY OF THE INVENTION

The inventors of the present invention carefully studied development of an optical touch panel usable outdoors. As a result, the inventors have completed the present invention, focusing on optical characteristics of a light-emitting element and a light-receiving element and mechanism of noise generation caused by ambient light. The term "a near-infrared range" herein means a wavelength range of 700 nm or more and less than 2,500 nm. The term "a visible range" herein means a wavelength range of 400 nm or more and less than 700 nm. And the term "an ultraviolet range" herein means a wavelength range of 1 nm or more and less than 400 nm.

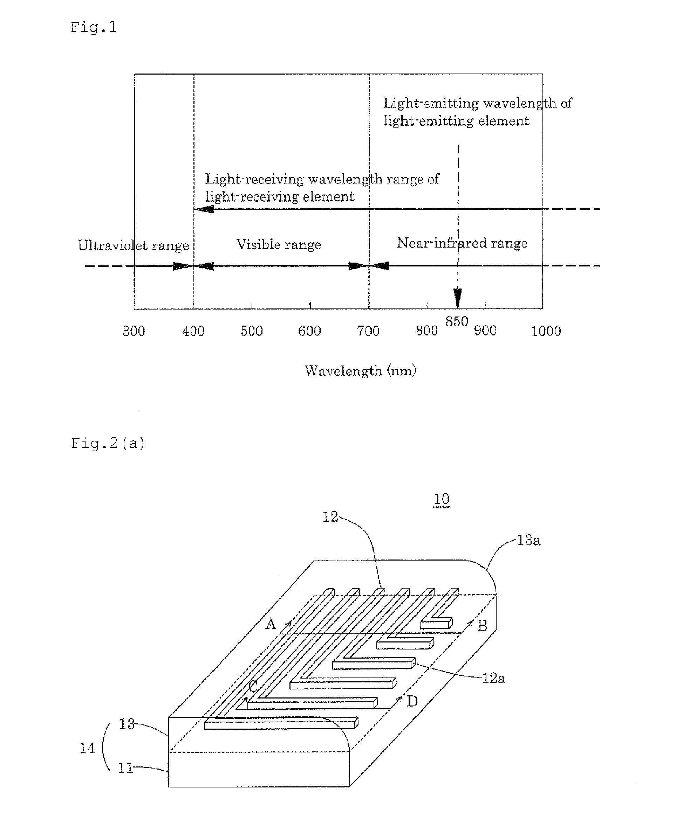

FIG. 1 shows a typical light-emitting wavelength range of a light-emitting element and a typical light-receiving wavelength range of a light-receiving element.
As shown in FIG. 1, a light-emitting element to be generally used for an optical touch panel emits light in a near-infrared range (for example, 850 nm). On the other hand, a light-receiving element to be generally used for an optical touch panel receives not only light in a near-infrared range but also light in a visible range. As a result, the light-receiving element receives not only light in the near-infrared range emitted from the light-emitting element but also ambient light in the visible range that enters cores after transmitting a clad. As a result, ambient light causes noise.

Therefore, the inventors of the present invention have made the clad contain a pigment mixture that consists of at least 2 kinds of pigments. The pigment mixture has stronger absorption of light in the visible range than in the near-infrared range. Accordingly, signal beams in the near-infrared range are hardly absorbed, although ambient light having entered the clad in the visible range is strongly absorbed. This makes it possible to significantly reduce ambient light in the visible range to enter cores after passing through the clad. Moreover, the inventors of the present invention have found out that it is possible to use the optical touch panel of the present invention outdoors, either.

According to the present invention, there is provided an optical waveguide comprising: a clad; and cores embedded in the clad. The clad has a lower light transmittance in a visible range than in a near-infrared range. This means that the clad has a lower transmittance in the visible range at any wavelength than in the near-infrared range at any wavelength when comparing the transmission spectrum in the near-infrared range with that in the visible range.
In preferred embodiments of the optical waveguide according to the present invention, the clad contains a pigment mixture that consists of at least two kinds of pigments. The pigment mixture has a lower light transmittance in the visible range than in the near-infrared range.
In another preferred embodiment of the optical waveguide according to the present invention, the clad further contains an ultraviolet-curable resin. The pigment mixture has a higher light transmittance in an ultraviolet range than in the visible range. This means that a wavelength having a higher light transmittance is located in the ultraviolet range than any wavelength located in the visible range when comparing the transmission spectrum in the visible range with that in the ultraviolet range.
In still another preferred embodiment of the optical waveguide according to the present invention, the clad has a light transmittance of at least 80% at a wavelength of 850 nm and less than 15% in the total range at a wavelength of at least 400 nm and less than 700 nm, and at least 10% at a wavelength of 365 nm.
In a further preferred embodiment of the optical waveguide according to the present invention, the clad has a thickness of 10 to 1,500 µm.
In a still further preferred embodiment of the optical waveguide according to the present invention, a portion of the clad to cover a light output end of the cores or a portion of the clad to cover a light input end of the cores forms a lens.
According to the present invention, there is also provided an optical touch panel which has the aforementioned optical waveguide.

### EFFECTS OF THE INVENTION

According to the present invention, an optical touch panel which is usable outdoors where the optical touch panel is directly exposed to sunlight has been materialized.

### BRIEF DESCRIPTION OF THE DRAWINGS

For a full understanding of the present invention, reference should now be made to the following detailed description of the preferred embodiments of the invention as illustrated in the accompanying drawings.

[0075]
FIG. 1 shows a light-emitting wavelength range of a light-emitting element and a light-receiving wavelength range of a light-receiving element;
FIG. 2 (a) is a perspective view of an optical waveguide of the present invention;
FIG. 2 (b) is a cross-sectional view of an optical waveguide of the present invention;
FIG. 2 (c) is a cross-sectional view of an optical waveguide of the present invention;
FIG. 3 (a) is a plan view of an optical touch panel of the present invention;
FIG. 3 (b) is a cross-sectional view of an optical touch panel of the present invention;
FIG. 4 is a graph showing a transmission spectrum of a second clad in Example and Comparative Example; and
FIG. 5 is a measurement graph of ambient light noise in Example and Comparative Example.

### DETAILED DESCRIPTION

The preferred embodiments of the present invention will now be described with reference to FIGs. 1-5 of the drawings. Identical elements in the various figures are designated with the same reference numerals.

### [Optical Waveguide]

An optical waveguide of the present invention comprises: a clad; and cores embedded in the clad. When the optical waveguide of the present invention has a clad and cores, the optical waveguide may have other components (e.g., a substrate).

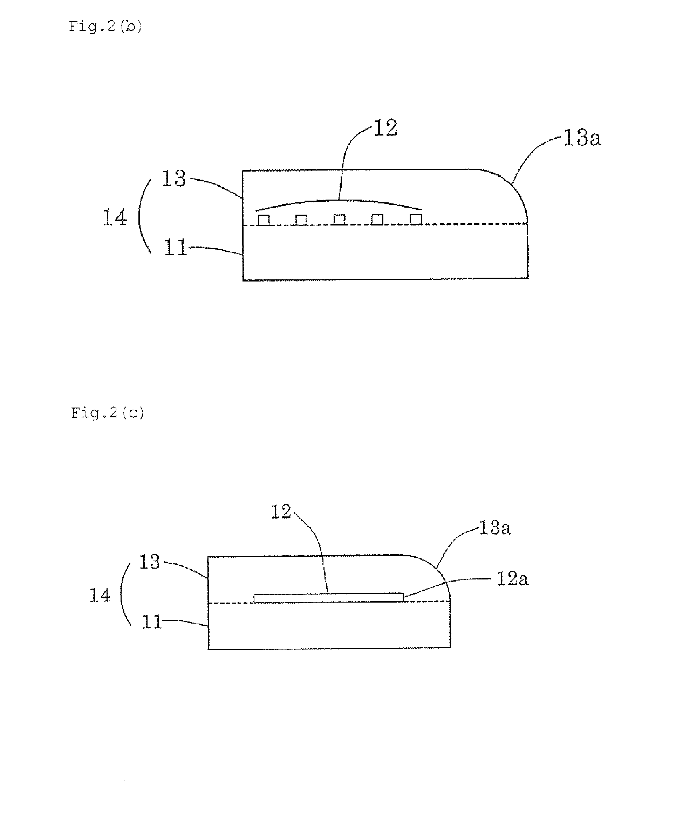

The embodiments of the optical waveguide according to the present invention are not particularly limited, but typically include embodiments shown in FIGs. 2 (a) to 2 (c). FIG. 2 (a) is a perspective view of an optical waveguide 10 in one embodiment of the present invention. FIG. 2 (b) is a cross-sectional view taken along the line A-B shown in FIG. 2 (a). FIG. 2 (c) is a cross-sectional view of the optical waveguide taken along the line C-D of the optical waveguide shown in FIG. 2 (a).

As shown in FIGs. 2 (a) to 2 (c), a first clad 11, a plurality of cores 12, and a second clad 13 are laminated in order in an optical waveguide 10 being an embodiment of the present invention. The first clad 11 is combined with the second clad 13 to be simply called as a clad 14. Since the plurality of cores are separated, the cores 12 are embedded in the clad 14.

In FIGs. 2 (a) to 2 (c), a lens 13a is formed on an end of the second clad 13. This inhibits light emitted from the cores 12 from diffusing in a longitudinal direction. And this allows light incident on the cores 12 to be focused in a longitudinal direction on the cores 12. To increase a use efficiency of signal beams, such a lens 13a is preferably formed. However, the lens 13a is not necessarily needed to be formed.

A material for the first clad 11 may be identical to or different from the material for the second clad 13. However, the identical material is preferable to reduce production costs.

Although the applications of the optical waveguide 10 according to the present invention are not particularly limited, the optical waveguide 10 being an embodiment of the present invention may be used for an optical touch panel and an optical sensor or the like. Particularly, the optical waveguide 10 is preferably used for an optical touch panel.

### [Clad]

The clad 14 to be used in the present invention contains a pigment mixture that consists of at least two kinds of pigments. The pigment mixture has stronger absorption of light in the visible range than in the near-infrared range. This makes it possible to reduce ambient light entering cores 12 in the visible range. When the clad 14 is used for an optical touch panel with an optical waveguide, it is possible to reduce effects of ambient light significantly. As a result, it becomes possible to use the optical touch panel outdoors.

The configuration containing one kind of dye whose light transmittance in the visible range is lower than in the near-infrared range may be used as the clad 14. Examples of such a dye include black pigments, such as C. I. Solvent Black 27, 28, and 2G and anthraquinone dye described in JP 09-003311 A.

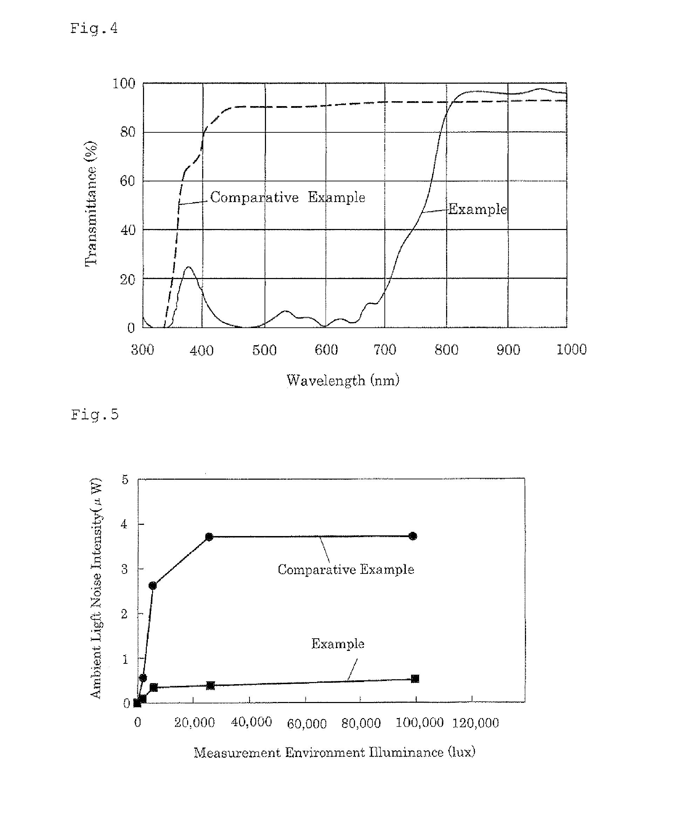

However, it is difficult for the clad 14 containing only one kind of such a dye to realize a spectrum having a high transmittance in the ultraviolet range as indicated in FIG. 4 (Example) described later. Since it is difficult for the clad 14 and the cores 12 to contain an ultraviolet-curable resin when the spectrum in the ultraviolet range does not have a high transmittance, there is lesser usefulness.

With the use of the clad 14 to be used in the present invention, it is possible to minimize the size and the thickness of the optical touch panel because the addition of a new light blocking member is not needed.

While the clad 14 to be used in the present invention has stronger absorption of light in the visible range, the clad 14 hardly absorbs light in the near-infrared range. Accordingly, there is little possibility of light in the near-infrared range being attenuated due to the effects of the clad 14 around the cored 12 when light emitted from the light-emitting element in the near-infrared range travels through the cores 12.

For the same reason, there is little possibility of light in the near-infrared range being attenuated due to the lens 13a when light in the near-infrared range which has traveled through the cores 12 shown in FIGs. 2 (a) to 2 (c) emits outside after passing through the lens 13a formed on the clad 14. When light in the near-infrared range is incident on the cores 12 after passing through the lens 13a formed on the clad 14, there is little possibility of light in the near-infrared range being attenuated by the lens 13a.

It is preferable that the pigment mixture has stronger absorption of light at a wavelength range of 500 nm or more and less than 650 nm than light at a wavelength range of 800 nm or more and less than 1,000 nm. Further, it is more preferable that the pigment mixture has stronger absorption of light at a wavelength range of 400 nm or more and less than 700 nm than light at a wavelength range of 750 nm or more and less than 1,500 nm.

The clad 14 to be used in the present invention more preferably contains an ultraviolet-curable resin. Since an ultraviolet-curable resin has superior patterning properties, a clad with high patterning precision is obtainable by containing an ultraviolet-curable resin. Further, the ultraviolet-curable resin has short curable time and superior productivity because the ultraviolet-curable resin is more superior in mold releasing properties than a thermosetting resin.

The pigment mixture contained in the clad 14 to be used in the present invention preferably has weaker absorption of light in the ultraviolet range than in the visible range. This does not weaken light in the ultraviolet range even if the pigment mixture is contained in the clad 14, resulting in inability of preventing the ultraviolet-curable resin contained in the clad from being cured.

The pigment mixture is not particularly limited as long as the mixture has stronger absorption of light in the visible range than in the near-infrared range. An example of the pigment mixture includes "FS-Black 1927" produced by Arimoto Chemical Co., Ltd.

The content of the pigment mixture contained in the clad 14 to be used in the present invention is preferably 0.01 to 5 weight %. There are fears that ambient light in the visible range that enters the cores 12 after transmitting the clad 14 might be not sufficiently reduced when the content of the pigment mixture is less than 0.01 weight %. When the content of the pigment mixture is over 5 weight %, light having traveled through the cores 12 is emitted outside after passing through the lens 13a formed on the clad 14, there are fears that light transmission might be blocked.

The aforementioned ultraviolet-curable resin is not particularly limited as long as the ultraviolet-curable resin is capable of ultraviolet curing. A typical example of the ultraviolet-curable resin includes "EP4080E" manufactured by ADEKA CORPORATION.

The content of the ultraviolet-curable resin contained in the clad 14 to be used in the present invention is preferably 80.0 to 99.9 weight %. There is a possibility that patterning properties might be degraded when the content of the ultraviolet-curable resin is less than 80.0 weight %. There is a possibility that light absorption in the visible range might be reduced when the content of the ultraviolet-curable resin is over 99.9 weight %.

The light transmittance of the clad 14 to be used in the present invention is preferably at least 80% at a wavelength of 850 nm, more preferably at least 85%, further more preferably at least 90%. Moreover, the light transmittance of the clad 14 to be used in the present invention is preferably less than 15% over the total wavelength range at 400 nm or more and less than 700 nm, more preferably less than 14.5%. Furthermore, the light transmittance of the clad 14 to be used in the present invention is preferably at least 10% at a wavelength of 365 nm, more preferably at least 13%, further more preferably at least 15%.

The light transmittance of the clad 14 to be used in the present invention is at least 80% at a wavelength of 850 nm. This enables to prevent light in the visible range from being attenuated by the effects of the clad 14 around the cores 12 when light in the near-infrared range emitted from the light-emitting element travels through the cores 12. And it is possible to prevent light in the near-infrared range from being attenuated by the effects of the clad 14 when light having traveled through the cores 12 is emitted outside after passing through the lens 13a formed on the clad 14.

The light transmittance of the clad 14 to be used in the present invention is less than 15% over the total wavelength range at a wavelength of 400 nm or more and less than 700 nm. Accordingly, it is possible to reduce ambient light in the visible range that enters the cores 12. This makes it possible to avoid the effects of ambient light for example, at a light level of 100,000 lux (direct sunlight level).

The light transmittance of the clad 14 to be used in the present invention is 10% or higher at a wavelength of 365 nm. Accordingly, the ultraviolet-curable resin in the clad 14 can be cured without any practical problems.

The clad 14 to be used in the present invention preferably has a thickness of 10 to 1,500 µm. When the clad has a thickness of less than 10 µm, there is a possibility that ambient light in the visible range might be unable to be fully absorbed. There is a possibility that enormous energy might be required to cure the ultraviolet-curable resin in the clad 14 when the clad 14 has a thickness of over 1,500 µm.

The clad 14 to be used in the present invention may be manufactured by any method, such as a dry etching method using plasma, a transfer method, an exposing/developing method, a photo-bleaching method and the like.

The clad 14 to be used in the present invention may be a single layer or a multiple layered laminate. In the case where the clad 14 has a multi-layered laminate, at least one layer (e.g., the second clad 13) of the laminate may contain a pigment mixture.

### [Cores]

The cores 12 to be used in the present invention are formed from any material having a high light transmittance at the wavelength of light traveling through the cores 12 and a higher refractive index than the clad 14. A material for forming the cores 12 is preferably an ultraviolet-curable resin having excellent patterning properties. Preferred examples of such an ultraviolet-curable resin include ultraviolet-curable acrylic resins, ultraviolet-curable epoxy resins, ultraviolet-curable siloxane resins, ultraviolet-curable norbornene resins, and ultraviolet-curable polyimide resins.

The flat shape of the cores 12 to be used in the present invention is not particularly limited, but examples of the flat shape of the cores 12 include a linear shape and a curve shape or the like. The flat shape of the cores 12 is preferably L-shaped shown in FIG. 2 (a) because the shape is capable of effectively guiding light for traveling to the coordinate input region.

The cross-sectional shape of the cores 12 to be used in the present invention is not particularly limited. The cross-sectional shape of the cores 12 is preferably a rectangle or a trapezoid with excellent patterning properties shown in FIG. 2 (b). The length of the bottom of the cores 12 (the width of the cores 12) is preferably 100 to 500 µm. The height of the cores 12 is preferably 10 to 100 µm.

The cores 12 to be used in the present invention may be manufactured by any method, such as a dry etching method using plasma, a transfer method, an exposing/developing method, and a photo-bleaching method or the like.

The maximum refractive index difference between the cores 12 and the clad 14 at a wavelength of light traveling through the cores 12 to be used in the present invention is preferably 0.01 or more, more preferably 0.02 to 0.3. The wavelength of light traveling through the cores 12 is the same as that of light emitted from the light-emitting element, typically 850 nm.

The refractive index of a resin for forming the cores 12 and the clad 14 to be used in the present invention can be increased or decreased as appropriate according to the kind and the content of an organic group introduced into the resin. For instance, the refractive index of the resin can be increased by the introduction of a cyclic aromatic group (e.g., a phenyl group) into a resin molecule or by increasing a cyclic aromatic group content per resin molecule. On the contrary, the refractive index of the resin can be decreased by, for example, introducing a linear or a cyclic aliphatic group (e.g., a methyl group or a norbornene group) into a resin molecule or by increasing a linear or a cyclic aliphatic group content per resin molecule.

### [Optical Touch Panel]

The optical touch panel of the present invention has an optical waveguide of the present invention. Therefore, it is possible to minimize the size and the thickness of the optical touch panel of the present invention and use the optical touch panel outdoors.

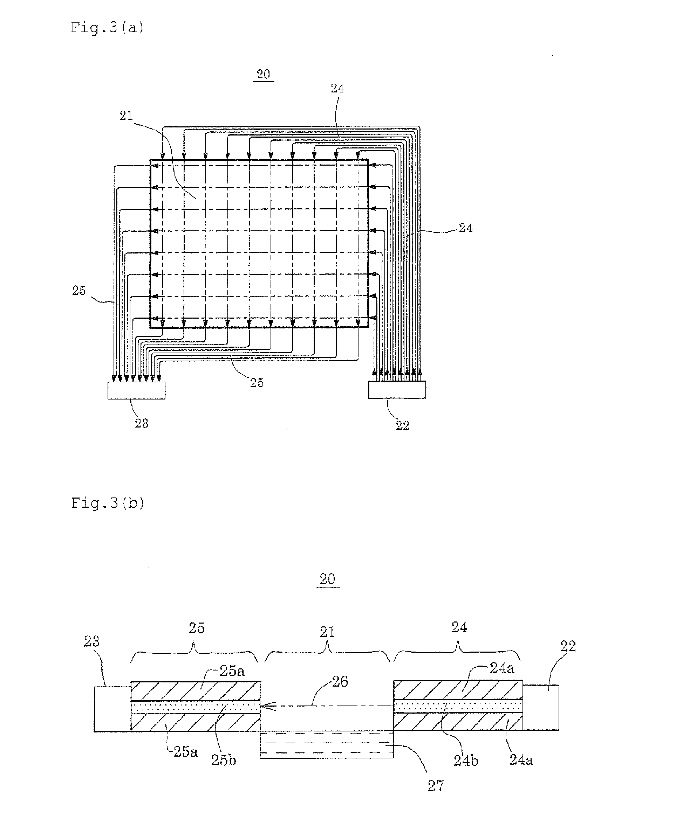

FIG. 3 (a) shows one example of preferred embodiments of an optical touch panel 20 of the present invention. The optical touch panel 20 being an embodiment of the present invention comprises: a coordinate input region 21; a light-emitting element 22 for emitting light in the near-infrared range; and a light- receiving element 23 for receiving light in the near-infrared range and the visible range. The optical touch panel 20 being an embodiment of the present invention further comprises: a first optical waveguide 24 arranged between the coordinate input region 21 and the light-emitting element 22; and a second optical waveguide 25 arranged between the coordinate input region 21 and the light-receiving element 23. An end surface on the coordinate input region 21 side of the first optical waveguide 24 and an end surface on the coordinate input region 21 side of the second optical waveguide 25 are located on the opposite sides of the coordinate input region 21. At least, an optical waveguide of the present invention is used as the second optical waveguide 25 connected to the light-receiving element 23.

In the optical touch panel 20 to be used in the present invention, light for traveling is guided to the light-receiving element 23 by the optical waveguide 25. Thus, the number of light-receiving elements 23 required may be far fewer than that of the light-receiving elements of an optical touch panel without optical waveguides. Moreover, the arrangement of the light-receiving element 23 has great flexibility, so that the optical touch panel 20 being an embodiment of the present invention is less affected by ambient light than the optical touch panel without optical waveguides.

At least, a pigment mixture to have strong absorption of light in the visible range is contained in a clad 25a of the second optical waveguide 25 connected to the light-receiving element 23. This enables to prevent ambient light in the visible range from traveling through a core 25b and reaching the light-receiving element 23. As a result, the optical touch panel 20 with high light levels and usable outdoors has been realized.

The applications of the optical touch panel 20 of the present invention are not particularly limited, but are used for PC input systems, such as bank ATM systems, railway ticket-vending machines, portable devices, such as mobile phones and game machines, office automation equipment, such as coping machines, car navigation systems, shop POS systems, and operation panels of factory automation equipment or the like.

### [Coordinate Input Region]

In this specification, the word "a coordinate input region 21" refers to a region for performing coordinate input by a finger or a pen. In the optical touch panel 20 being an embodiment of the present invention, the light-receiving element 23 functions as a sensor. Therefore, the coordinate input region 21 does not need to have an overlay film, such as an ITO film layer (e.g., a film layer or a glass layer) functioning as a sensor.

FIG. 3 (b) is a schematic cross-sectional view of one preferred embodiment of the optical touch panel 20 of the present invention. Light 26 emitted from the light-emitting element 22 passes in air in the coordinate input region 21 after passing through a core 24b embedded in a clad 24a of the first optical waveguide 24. Subsequently, the light 26 reaches the light-receiving element 23 after passing through the core 25b embedded in the clad 25a of the second optical waveguide 25.

As shown in FIG. 3 (b), the coordinate input region 21 preferably has a transparent panel 27 downwardly. This is due to protect a liquid crystal display device and a plasma display device provided downwardly in the coordinate input region 21. The transparent panel 27 is not particularly limited, but a glass plate or an acrylic plate or the like is used as the transparent panel 27. The transparent panel 27 preferably has a thickness of 10 µm to 5 mm.

### [Light-emitting element/light-receiving element]

The light-emitting element 22 to be used in the present invention is an element for emitting light in the near-infrared range, and is preferably a light-emitting diode or a semiconductor laser, more preferably a VCSEL (Vertical Cavity Surface Emitting Laser). A VCSEL is excellent in light transmission because light in a VCSEL is resonated in a direction perpendicular to a substrate surface and light emitted therefrom also propagates in a direction perpendicular to the substrate surface. The wavelength of light emitted from the light-emitting element 22 is preferably in the near-infrared range.

The light-receiving element 23 to be used in the present invention receives light in the visible and near-infrared ranges and converts an optical signal to an electrical signal. The light-receiving element 23 is preferably a phototransistor or a photo diode, more preferably, a CMOS (Complementary Metal Oxide Semiconductor) image sensor or a CCD (Charge Coupled Device) image sensor.

### EXAMPLES

### [EXAMPLE]

### [Preparation of material for forming Clad 14]

A material for forming a first clad 11 and a second clad 13 were prepared by mixing 100 parts by weight of a UV-curable epoxy-based resin having an alicyclic skeleton (EP4080E manufactured by ADEKA CORPORATION) (Component A), 2 parts by weight of a photo-acid-generator (CPI-200K manufactured by SAN-APRO Ltd.) (Component B), and 0.1 parts by weight of a pigment mixture which consists of 4 kinds of pigments (FS-Black 1927 manufactured by ARIMOTO CO., LTD.) (Component C).

### [Preparation of material for forming Cores 12]

A material for forming cores 12 was prepared by mixing 40 parts by weight of a UV-curable epoxy-based resin having a fluorene skeleton (OGSOL EG manufactured by Osaka Gas Chemicals Co., Ltd.) (Component D), 30 parts by weight of a UV-curable epoxy-based resin having a fluorene skeleton (EX-1040 manufactured by Nagase ChemteX Corporation) (Component E), 30 parts by weight of 1,3,3-tris(4-(2-(3-oxetanyl))butoxyphenyl)butane (Component F), 1 part by weight of the Component B, and 41 parts by weight of ethyl lactate (Component G).

### [Formation of Optical Waveguide 10]

### [Formation of first clad 11]

The material for forming a clad was applied onto a surface of a polyethylene naphthalate (PEN) film (150 mm x 150 mm x 0.188 mm) with an applicator. Thereafter, exposure by the use of irradiation with ultraviolet light at 1,000 mJ/cm² was performed through the entire surface of the film and thermally-treated at 80°C for 5 minutes to form a first clad 11. The thickness of the first clad 11 as measured with a contact-type film thickness meter was 20 µm. The refractive index of the first clad 11 as measured at a wavelength of 830 nm was 1.510.

### [Formation of Cores 12]

The material for forming the cores 12 was applied onto a surface of the first clad 11 with an applicator and thermally-treated at 100°C for 5 minutes. Next, a photo mask made of synthesized quartz on which a prescribed pattern was printed was put. Thereafter, exposure by the use of irradiation with ultraviolet light at 2,500 mJ/cm² (peak wavelength: 365 nm) using an i line band pass filter was performed by a proximity exposing method (gap: 100 µm) and thermally-treated at 100°C for 10 minutes.

An unexposed portion of the core layer was dissolved away using an aqueous γ-butyrolactone solution and a heat treatment was performed at 120°C for 5 minutes to form the cores 12.

The cross-sectional dimensions of each of the cores 12 were width: 20 µm and height: 50 µm when measured by a microscope. The refractive index of each of the cores 12 as measured at a wavelength of 830 nm was 1.592.

### [Formation of second clad 13]

A material for forming the second clad 13 was applied onto the surface of the first clad 11 and the cores 12 with an applicator. Next, a quartz molding die having negative lens was pressed on the cores 12. Subsequently, exposure by the use of irradiation with ultraviolet light at 5,000 mJ/cm² (Peak wavelength: 365 nm) was performed on the entire surface of the molding die. And then a heating treatment was performed at 80°C for 5 minutes. Thereafter, the molding die was released to form the second clad 13 having the lens 13a shown in FIGs. 2 (a) to 2 (c). The second clad 13 had a film thickness of 1,000 nm.

The transmission spectrum of the second clad 13 in the optical waveguide 10 of Example shows FIG. 4 (Example). The light transmittance of the second clad 13 of the optical waveguide 10 in Example was 95% at a wavelength of 850 nm, less than 15% in the total range of the wavelength of 400 nm to 700 nm, and 14% at a wavelength of 365 nm. The refractive index of the second clad 13 at a wavelength of 830 nm was 1.510. The transmission spectrum of the second clad 13 substantially corresponds with that of a pigment mixture (FS-Black 1927 manufactured by ARIMOTO CO., LTD.). It is difficult for one kind of pigment alone to obtain a peak near 380 nm of the spectrum in Example shown in FIG. 4. That is, it is difficult for one kind of pigment alone to lower the transmittance in the visible range and raise the transmittance in the ultraviolet range. Thus, a pigment mixture in which at least two kinds of pigments were mixed was used in Example.

The manufactured optical waveguide 10 was cut in a touch panel shape using a blade to cut an end surface with a dicing device.

### [Production of Optical Touch Panel 20]

An optical touch panel 20 was prepared by a combination of two optical waveguides manufactured in Example as shown in FIG. 3 (a). A light-emitting element 22 (VCSEL manufactured by Optwell Co., Ltd.) for emitting light having a wavelength of 850 nm was coupled to an end of the first optical waveguide 24. A light-receiving element 23 (CMOS Linear Sensor Array produced by TAOS Inc.) was coupled to an end of the second optical waveguide 25. An output end of the optical waveguide 24 and an input end of the optical waveguide 25 were disposed so as to face each other with the coordinate input region 21 interposed therebetween to produce an optical touch panel 20 (having 3 inches in diagonal length) as shown in FIG 3 (a).

### [Comparative Example]

### [Preparation of Material for forming Clad]

A material for forming a clad in Comparative Example was the same as that of the clad 14 in Example except for not containing a pigment mixture. More specifically, a material for forming a first clad and a second clad in Comparative Example was prepared by mixing 100 parts by weight of an ultraviolet-curable epoxy resin having an alicyclic skeleton (Component A) and 2 parts by weight of a photo-acid-generator (CPI-200K produced by SAN-APRO LTD.)

### (Component B).

### [Preparation of Material for forming cores]

The material for forming cores in Comparative Example was the same as that for forming the cores 12 in Example.

### [Production of Optical Waveguide]

An optical waveguide in Comparative Example was produced in the same manner as in Example except for exposure conditions of the second clad. The dose of ultraviolet ray-irradiation was reduced down to 2,000 mJ/cm² because a pigment mixture was not contained in the second clad in Comparative Example. Since the first clad has a small thickness, containing no pigment mixture has a low impact. Accordingly, the exposure conditions were identical to those in Example.

FIG. 4 (Comparative Example) shows the transmission spectrum of the second clad in Comparative Example. The light transmittance of the second clad in Comparative Example was 92% at a wavelength of 850 nm, less than 92% in the total range of a wavelength of 400 to 700 nm, and 52% at a wavelength of 365 nm. The second clad in Comparative Example has a high transparency degree not only in the near-infrared range but also in the visible range.

### [Production of Optical Touch Panel]

An optical touch panel in Comparative Example was produced by a combination of two optical waveguides produced in Comparative Example as shown in FIG. 3 (a). A light-emitting element and a light-receiving element used in Comparative Example were the same as those used in Example.

### [Evaluation of Ambient Light Noise]

In respective optical touch panels in Example and Comparative Example, when light having an intensity of 5,000 µW was emitted from the light-emitting element in a dark room, light having an intensity of 4.0 µW was respectively received at the light-receiving element.

Each of the optical touch panels in Example and Comparative Example is disposed in various environments to measure the intensity of ambient light received at each of the light-receiving elements. Table 1 and FIG. 5 show the measuring results.

**[Table 1]**

| Ambient light noise intensity (Saturation value=4.0 µW) | | | | | |
|---|---|---|---|---|---|
| Measurement environment | Dark room | Under fluorescent lamp | Indoor window | Shade of outdoors | Direct sun light |
| Light level (lux) | 1 | 1,000 | 5,000 | 26,000 | 100,000 |
| Example (µW) | 0 | 0.1 | 0.2 | 0.3 | 0.4 |
| Comparative Example (µW) | 0 | 0.5 | 2.7 | 3.7 | 3.7 |

The optical touch panel 20 in Example in which a pigment mixture was contained in the clad had a light-receiving intensity as small as 0.4 µW at a light level of 100,000 lux (brightness of direct sunlight), which was within the scope of the usable noise intensity. On the other hand, the optical touch panel in Comparative Example in which a pigment mixture was not contained in the clad had already a light-receiving intensity of 3.7 µW at a light level of 26,000 lux (brightness in the shade of outdoors), which was not usable.

### [Measurement Method]

### [Refractive Index]

The refractive index was measured by using a prism coupler (SPA-4000 manufactured by Sairon Technology, Inc.).

### [Width and Height of Core]

An optical waveguide was cut crosswise using a dicing saw (DAD522 manufactured by DISCO Corporation), and the cutting surface of the optical waveguide was observed using a microscope (VHX-200 manufactured by Keyence Corporation) to measure the width and height of each core.

### [Transmission Spectrum]

The transmission spectrum of a clad with a thickness of 1,000 µm formed on a glass substrate was measured using a spectrophotometer (U-4100 manufactured by HITACHI, LTD.). The transmission spectrum of a glass substrate was also measured as a reference before the clad was formed thereon.

## Claims

1. An optical waveguide (10) comprising:
a clad (14); and
cores (12) embedded in the clad,
wherein the clad (14) has a lower light transmittance in a visible range than in a near-infrared range.

2. The optical waveguide according to claim 1, wherein the clad (14) contains a pigment mixture that consists of at least 2 kinds of pigments, and the pigment mixture has a lower light transmittance in the visible range than in the near-infrared range.

3. The optical waveguide according to claim 1 or claim 2, wherein the clad (14) further contains an ultraviolet-curable resin, and the pigment mixture has a higher light transmittance in an ultraviolet range than in the visible range.

4. The optical waveguide according to claim 1 or claim 2, wherein the clad (14) has a light transmittance of at least 80% at a wavelength of 850 nm and less than 15% in the total range at a wavelength of at least 400 nm and less than 700 nm, and at least 10% at a wavelength of 365 nm.

5. The optical waveguide according to claim 3, wherein the clad (14) has a light transmittance of at least 80% at a wavelength of 850 nm and less than 15% in the total range at a wavelength of at least 400 nm and less than 700 nm, and at least 10% at a wavelength of 365 nm.

6. The optical waveguide according to claim 1 or claim 2, wherein the clad (14) has a thickness of 10 to 1,500 µm.

7. The optical waveguide according to claim 1 or claim 2, wherein one of a portion of the clad (14) to cover a light output end (12a) and a portion of the clad to cover a light input end of the cores (12) forms a lens (13a).

8. An optical touch panel (20) comprising the optical waveguide (10) according to claim 1 or claim 2.
